(19) Europäisches Patentamt
European Patent Office
Office européen des brevets

(11) **EP 3 531 639 B1**

(12) **EUROPEAN PATENT SPECIFICATION**

(45) Date of publication and mention
of the grant of the patent:
**23.09.2020  Bulletin 2020/39**

(51) Int Cl.:
***H04L 12/819*** (2013.01)        ***H04W 72/12*** (2009.01)

(21) Application number: **19153354.6**

(22) Date of filing: **23.01.2019**

(54) **METHOD AND SYSTEM FOR CONTROLLING ACCESS TO A COMMUNICATIONS MEDIUM**

VERFAHREN UND SYSTEM ZUR STEUERUNG DES ZUGANGS AUF EIN KOMMUNIKATIONSMEDIUM

PROCÉDÉ ET SYSTÈME DE CONTRÔLE D'ACCÈS À UN SUPPORT DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2018  US 201815904382**

(43) Date of publication of application:
**28.08.2019  Bulletin 2019/35**

(73) Proprietor: **NXP B.V.**
**5656 AG Eindhoven (NL)**

(72) Inventors:
• **AXER, Philip**
**5656 AG Eindhoven (NL)**
• **PANNELL, Donald Robert**
**5656 AG Eindhoven (NL)**
• **PANDEY, Sujan**
**5656 AG Eindhoven (NL)**

(74) Representative: **Hardingham, Christopher Mark NXP Semiconductors Intellectual Property Group Abbey House 25 Clarendon Road Redhill, Surrey RH1 1QZ (GB)**

(56) References cited:
**WO-A1-2007/051153     US-A1- 2010 208 665 US-A1- 2018 041 956**

**Description**

BACKGROUND

In a shared-medium communications network, such as a wireless network or a wired network, a medium access control (MAC) mechanism is required to control access to a shared communications medium, such as a bus or an electromagnetic spectrum. For example, an arbitration mechanism can be used to orchestrate the access to the shared communications medium and eventually allow any communications node to transmit data through the shared communications medium. For instance, Ethernet as defined in IEEE 802.3 uses a CSMA/CD (Carrier Sense Multiple Access, Collision Detection) scheme, Wi-Fi transmission uses a CSMA/CA (Carrier Sense Multiple Access, Collision Avoidance) scheme, and distributed coordination function (DCF) in a Controller Area Network uses a CSMA/CA scheme. United States patent application publication number US 2018/0041956 discloses a method of wireless communication including aligning a discontinuous reception schedule for a user equipment with a plurality of token arrival times, determining, at a time based on a first token arrival time, whether an RF band is available for communication, and transmitting control information on the RF band when the RF band is available for communication. This document also discloses the use of fractional tokens providing for transmission of shorter subframes.

SUMMARY

The present invention is defined in the independent claims. The dependent claims define particular embodiments of the invention. Embodiments of a method and a device are disclosed. In an example, a method for controlling access to a communications medium involves replenishing a credit value assigned to a communications node in a communications round, granting or denying access to the communications medium to the communications node during the communications round based on the credit value, and controlling the credit value in response to granting or denying access to the communications medium to the communications node during the communications round. Other embodiments are also described.

In an example, replenishing the credit value assigned to the communications node in the communications round involves replenishing the credit value assigned to the communications node in the communications round with a fixed replenishment value at a start of the communications round.

In an example, replenishing the credit value assigned to the communications node in the communications round with the fixed replenishment value at the start of the communications round involves replenishing the credit value assigned to the communications node in the communications round with the fixed replenishment value before granting or denying access to the communications medium to the communications node during the communications round based on the credit value.

In an example, the method further involves determining a replenishment value as a function of the credit value, and replenishing the credit value assigned to the communications node in the communications round involves replenishing the credit value assigned to the communications node in the communications round with the replenishment value.

In an example, determining the replenishment value as the function of the credit value involves determining the replenishment value as the function of the credit value and a second credit value that is assigned to a second communications node having access to the communications medium in the communications round.

In an example, the method further involves receiving, at the communications node, a message from the second communications node containing the second credit value.

In an example, the method further involves comprising estimating the second credit value based on a data frame transmitted by the second communications node in a predetermined time slot during the communications round.

In an example, determining the replenishment value as the function of the credit value and the second credit value involves determining the replenishment value based on a maximum value or a minimum value of the credit value and the second credit value.

In an example, granting or denying access to the communications medium to the communications node during the communications round based on the credit value involves allowing or prohibiting the communications node to transmit a data frame through the communications medium in a predetermined time slot during the communications round based on the credit value.

In an example, granting or denying access to the communications medium to the communications node during the communications round based on the credit value involves comparing the credit value with a credit threshold and allowing or prohibiting the communications node to transmit a data frame through the communications medium in a predetermined time slot during the communications round based on a comparison result between credit value and the credit threshold.

In an example, granting or denying access to the communications medium to the communications node during the communications round based on the credit value involves comparing the credit value with a credit threshold, if the credit value is greater than the credit threshold, allowing the communications node to transmit a data frame through the communications medium in a predetermined time slot during the communications round, and if the credit value is less than the credit threshold, allowing the communications node to transmit a stall message that indicates the communications node is not allowed to transmit the data frame through the communications medium in the predetermined time slot during the communications round.

In an example, controlling the credit value in response to granting or denying access to the communications medium to the communications node during the communications round involves deducting a credit consumption value from the credit value in response to granting access to the communications medium to the communications node during the communications round and maintaining the credit value for a subsequent communications round in response to denying access to the communications medium to the communications node during the communications round.

In an example, the method further involves determining the credit consumption value based on a characteristic of a data frame that is transmitted by the communications node through the communications medium in a predetermined time slot during the communications round.

In an example, determining the credit consumption value based on the characteristic of the data frame that is transmitted by the communications node through the communications medium in the predetermined time slot during the communications round involves calculating the credit consumption value as a function of a size of the data frame that is transmitted by the communications node through the communications medium in the predetermined time slot during the communications round.

In an example, a device for controlling access to a communications medium includes a credit protocol manager configured to replenish a credit value assigned to a communications device in a communications round, a distributed round-robin scheduler configured to grant or deny access to the communications medium for the communications device during the communications round based on the credit value, and a credit counter configured to control the credit value in response to granting or denying access to the communications medium for the communications device during the communications round.

In an example, the credit protocol manager is further configured to replenish the credit value assigned to the communications node in the communications round with a fixed replenishment value before granting or denying access to the communications medium to the communications node during the communications round based on the credit value.

In an example, the credit protocol manager is further configured to determine a replenishment value as the function of the credit value and a second credit value that is assigned to a second communications node having access to the communications medium in the communications round and replenish the credit value assigned to the communications node in the communications round with the replenishment value.

In an example, the distributed round-robin scheduler is further configured to if the credit value is greater than a credit threshold, allow the communications node to transmit a data frame through the communications medium in a predetermined time slot during the communications round and if the credit value is less than the credit threshold, allow the communications node to transmit a stall message that indicates the communications node is not allowed to transmit the data frame through the communications medium in the predetermined time slot during the communications round.

In an example, the credit counter is further configured to deduct a credit consumption value from the credit value as a function of a size of a data frame that is transmitted by the communications node through the communications medium in a predetermined time slot during the communications round and maintain the credit value for a subsequent communications round in response to denying access to the communications medium to the communications node during the communications round.

In an example, a computer-readable medium containing program instructions for controlling access to a communications medium is described. Execution of the program instructions by one or more processors causes the one or more processors to perform the above described method in accordance with an embodiment of the present application.

Other aspects in accordance with the invention will become apparent from the following detailed description, taken in conjunction with the accompanying drawings, illustrated by way of example of the principles of the invention.

BRIEF DESCRIPTION OF THE DRAWINGS

Fig. 1 depicts a communications network that includes multiple communications nodes that communicate through a shared communications medium.
Fig. 2 depicts an example of two communications rounds in the communications network depicted in Fig. 1.
Fig. 3 depicts another example of two communications rounds in the communications network depicted in Fig. 1.
Fig. 4 depicts an embodiment of a MAC unit of a communications node in the communications network depicted in Fig. 1.
Fig. 5 depicts an example of communications rounds in which the communications nodes depicted in Fig. 1 participate.

Fig. 6 depicts an example of communications rounds in which link capacity is lost.
Fig. 7 depicts an example of communications rounds in which the communications nodes depicted in Fig. 1 participate.
Fig. 8 depicts another example of communications rounds in which the communications nodes depicted in Fig. 1 participate.
Fig. 9 is a process flow diagram of a method for controlling access to a communications medium in accordance with an embodiment of the invention.

Throughout the description, similar reference numbers may be used to identify similar elements.

DETAILED DESCRIPTION

The following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

Techniques described herein can be applied to any type of shared medium communications networks, included wired communications networks and wireless communications networks. Although in some embodiments a specific type of communications networks is described, it should be noted that the invention is not restricted to a specific type of communications network.

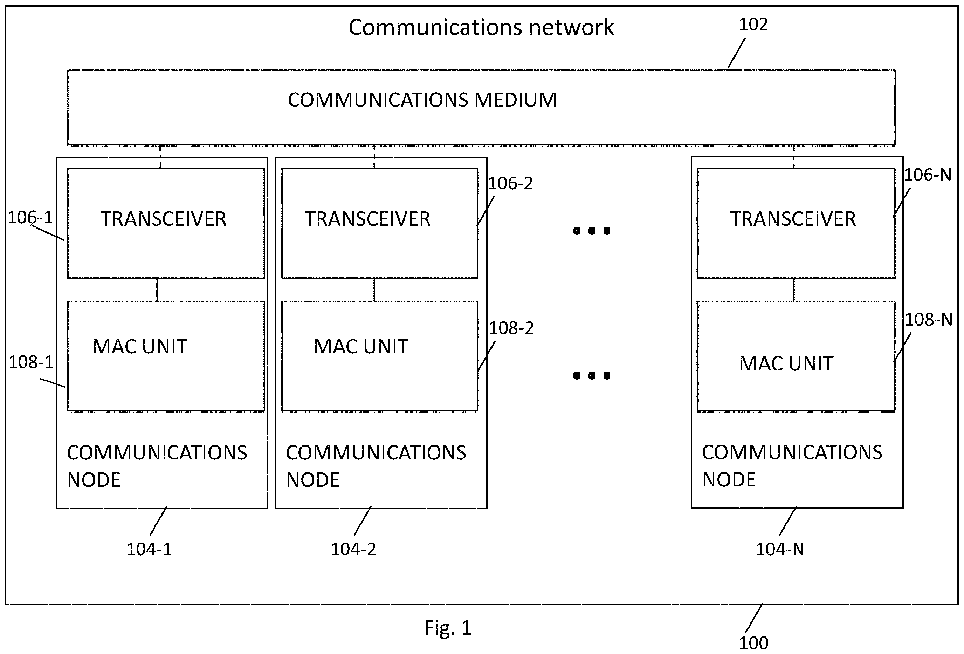

Fig. 1 depicts a communications network 100 that includes multiple communications nodes 104-1, 104-2, ..., 104-N (where N is an integer greater than one) that communicate through a shared communications medium 102. The communications medium may be a wired communications medium, a wireless communications medium, or a combination thereof. In the embodiment of Fig. 1, each communications node includes a corresponding transceiver 106-1, 106-2, ..., or 106-N and a corresponding medium access controller (MAC) units 108-1, 108-2, ..., or 108-N configured to perform medium access arbitration to orchestrate the access to the communications medium. Although the illustrated communications nodes are shown with certain components and described with certain functionality herein, other embodiments of the communications nodes may include fewer or more components to implement the same, less, or more functionality.

The communications network 100 depicted in Fig. 1 may be a wired communications network or a wireless communications network. In some embodiments, the communications network is used in an Ethernet based network, such as an Institute of Electrical and Electronics Engineers (IEEE) P802.3cg compatible single twisted pair Ethernet network. In these embodiments, the MAC units 108-1, 108-2, ..., 108-N may be implemented within the physical (PHY) layer module of the Open Systems Interconnection (OSI) model of an IEEE 802.3cg compatible Ethernet communications device. The communications network can be used for various applications. In some embodiments, the communications network is used for automotive application. For example, the communications network is an in-vehicle network (IVN) used in a bus system within a vehicle, such as a Controller Area Network (CAN), a Local Interconnect Network (LIN), a Media Oriented Systems Transport (MOST) network, a FlexRay compatible network, or other types of IVNs.

The transceivers 106-1, 106-2, ..., 106-N, which may be wired transceivers or wireless transceivers, are configured to decode messages received through the shared communications medium 102 and to generate appropriate outgoing messages to be transmitted through the shared communications medium. Each of the transceivers may include at least one antenna (not shown) for transmitting signal through an electromagnetic spectrum. In some embodiments, the transceivers are connected to at least one device (not shown) such as a sensor, an actuator, or some other control device. In some embodiments, at least one of the transceivers is an IEEE 802.3cg compatible transceiver. In some embodiments, the transceivers implement physical layer operations. For example, in receive operations, a transceiver converts analog signals from a bus or from an antenna to digital signals that the corresponding communications node can interpret. The transceiver may also protect a corresponding MAC unit from extreme electrical conditions on a bus, e.g., electrical surges. In transmit operations, a transceiver converts digital bits received into analog differential signals that are sent on a bus or through an antenna. In some embodiments, a bus carries analog signals and includes high and low bus lines.

The MAC units 108-1, 108-2, ..., 108-N are configured to perform medium access control for the corresponding communications nodes 104-1, 104-2, ..., 104-N. The MAC units may be implemented as processors, such as microcontrollers also referred to as host processors, hosts, or digital signal processors (DSPs), or central processing units (CPUs). In some embodiments, at least one of the MAC units is included within the PHY layer module of an IEEE 802.3cg compatible Ethernet communications device. Although the illustrated MAC units are shown in Fig. 1 as included in the corresponding communications nodes, in some embodiments, the MAC units may be separated from the corresponding communications nodes. For example, the MAC units may be implemented within a bus to which the corresponding communications nodes are connected.

In some embodiments, the communications nodes 104-1, 104-2, ..., 104-N in the communications network 100 communicate in a round-robin fashion. In an embodiment, a round of communications, which is also referred to as a communications round, is a fixed sequence (e.g., a fixed order of transmission) of transmit opportunities or time slots. In each communications round, the sequence of transmission or the order of transmission (e.g., Node A then Node B) may be fixed for the communications nodes. For example, when the communications nodes 104-1, 104-2 transmit in communications rounds, the communications node 104-1 transmits during a first time slot in each communications round while the communications node 104-2 transmits during a second time slot in each communications round in the fixed order of transmission. When the communications nodes 104-1, 104-2, 104-3 transmit in communications rounds, the communications node 104-1 transmits during a first time slot in each communications round, the communications node 104-2 transmits during a second time slot in each communications round, and the communications node 104-3 transmits during a third time slot in each communications round in the fixed order of transmission. Each communications round may be preceded by a special beacon to indicate the start of the communications round. The duration of the time slots is determined by the length of data frames during the time slots. In some embodiments, a communications node transmits a yield message or command in a time slot assigned to the communications node to yield the communications medium to other communications node(s) (i.e., give access to the communications medium to other communications node(s)).

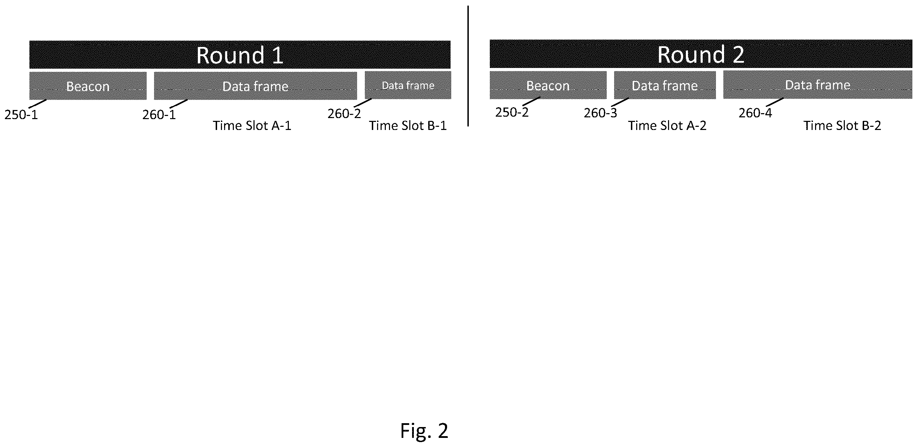

Fig. 2 depicts an example of two communications rounds in the communications network 100 depicted in Fig. 1. Two communications nodes 104-1, 104-2 participate in the communications rounds depicted in Fig. 2. In round 1, a beacon 250-1 is transmitted through the communications medium 102, subsequently a first data frame 260-1 is transmitted through the communications medium by the communications node 104-1 during a time slot A-1, and subsequently a second data frame 260-2 is transmitted through the communications medium by the communications node 104-2 during a time slot B-1. The beacon 250-1 may be transmitted by the communications node 104-1. The duration of the time slots A-1, B-1 are determined by the length of the data frames 260-1, 206-2, respectively. In round 2, a beacon 250-2 is transmitted through the communications medium, subsequently a data frame 260-3 is transmitted through the communications medium by the communications node 104-1 during a time slot A-2, and subsequently a data frame 260-4 is transmitted through the communications medium by the communications node 104-2 during a time slot B-2. The beacon 250-2 may be transmitted by the communications node 104-1.

The duration of the time slots A-2, B-2 are determined by the length of the data frames 260-3, 206-4, respectively. Time space may exist between adjacent time slots. For example, a fixed time space or a flexible time space may exist between the time slot A-1 and the time slot B-1 and/or between the time slot A-2 and the time slot B-2.

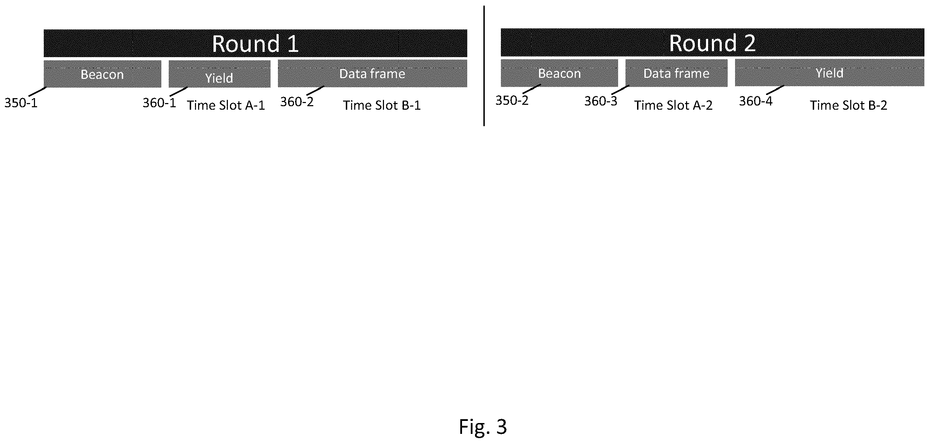

Fig. 3 depicts another example of two communications rounds in the communications network 100 depicted in Fig. 1. Two communications nodes 104-1, 104-2 participate in the communications rounds depicted in Fig. 3. In round 1, a beacon 350-1 is transmitted through the communications medium 102, subsequently a yield message 360-1 is transmitted through the communications medium by the communications node 104-1 during a time slot A-1 to yield the communications medium to the communications node 104-2, and subsequently a data frame 360-2 is transmitted through the communications medium by the communications node 104-2 during a time slot B-1. The beacon 350-1 may be transmitted by the communications node 104-1. The duration of the time slots A-1, B-1 are determined by the length of the yield message 360-1 and the data frame 360-2, respectively. In round 2, a beacon 350-2 is transmitted through the communications medium, subsequently a data frame 360-3 is transmitted through the communications medium by the communications node 104-1 during a time slot A-2, and subsequently a yield message 360-4 is transmitted through the communications medium by the communications node 104-2 during a time slot B-2 to yield the communications medium. The beacon may be transmitted by the communications node 104-1. The duration of the time slots A-2, B-2 are determined by the length of the data frame 360-3 and the yield message 360-4, respectively. Time space may exist between adjacent time slots.

In some embodiments, each of the MAC units 108-1, 108-2, ..., 108-N implements a fairness control mechanism for a corresponding communications node 104-1, 104-2, ..., or 104-N. In these embodiments, each MAC unit controls medium admission for a corresponding communications node by keeping track of recent data transmissions. A credit value or level may be maintained by each communications node individually. In an embodiment, the credit value is replenished in each communications round and is consumed if a data frame is transmitted and admission to the communications medium is only granted when credit is available. In an example operation of the communications node 104-1, 104-2, ..., or 104-N, a credit value assigned to the communications node is replenished in a communications round, access to the communications medium to the communications node during the communications round is granted or denied based on the credit value, and the credit value is controlled in response to granting or denying access to the communications medium to the communications node during the communications round. In an embodiment, the credit value assigned to the communications node in the communications round is replenished with a fixed replenishment value at a start of the communications round (e.g., before granting or denying access to the communications medium to the communications node during the communications round based on the credit value). In an embodiment, the replenishment value is determined as a function of the credit value and the credit value assigned to the communications node in the communications round is replenished with the replenishment value. For example, the replenishment value is determined as the function of the credit value and a second credit value that is assigned to a second communications node having access to the communications medium in the communications round. A message from the second communications node containing the second credit value may be received at the communications node. Alternatively, the second credit value may be estimated based on a data frame transmitted by the second communications node in a predetermined time slot during the communications round.

Compared to a typical communications network, the communications network depicted 100 in Fig. 1 allows the communications nodes to share the communications medium based on credit values in respective communications rounds to increase or maximize medium usage while increasing or maximizing fairness regarding the sharing of the communications medium. For example, compared to a round-robin access scheme that permits each communications node in the communication network to transmit one data frame in each communications round, the MAC units 108-1, 108-2, ..., 108-N implements a fairness control mechanism based on credit values in respective communications rounds for the corresponding communications nodes that allows the communications nodes to share the communications medium with increased fairness. For example, in a round-robin access scheme that permits each communications node in the communication network to transmit one data frame in each communications round, a communications node A may transmit a large data frame (e.g., 1526 bytes) in each communications round while a communications node B transmits a small data frame (e.g., 64 bytes) in each communications round, resulting in unfairness in medium sharing (e.g., node A having around 96% of access and node B having around 4% of access).

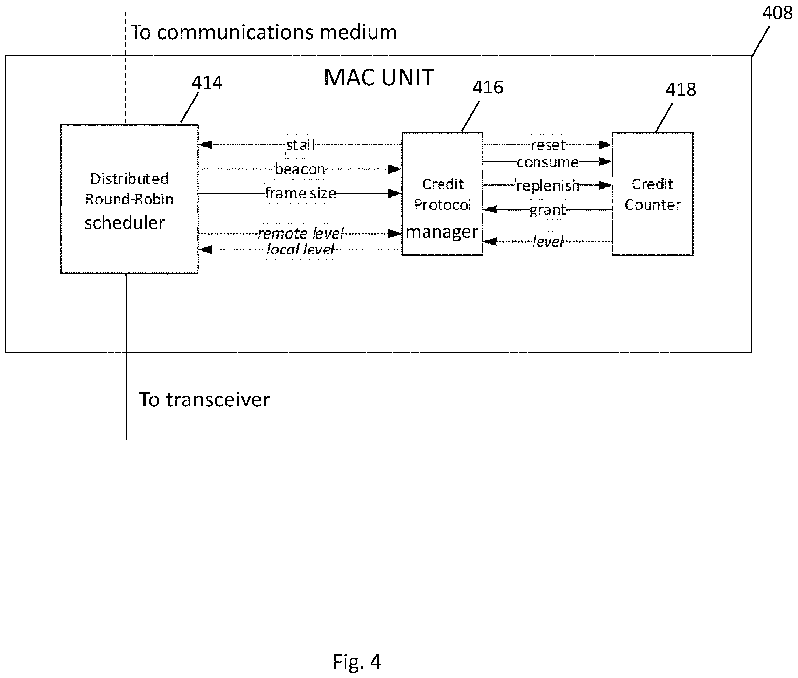

Fig. 4 depicts an embodiment of one of the MAC units 108-1, 108-2, ..., 108-N of the communications nodes 104-1, 104-2, ..., 104-N in the communications network 100 depicted in Fig. 1. In the embodiment of Fig. 4, a MAC unit 408 includes a distributed round-robin scheduler 414, a credit protocol manager 416, and a credit counter 418. One or more of the distributed round-robin scheduler, the credit protocol manager, and the credit counter may be implemented in software, hardware, firmware, or a combination of software, hardware, and firmware. In some embodiments, the distributed round-robin scheduler, the credit protocol manager, and the credit counter may be implemented in one or more processors, such as microcontrollers or CPUs. The MAC unit 408 depicted in Fig. 4 is a possible implementation of the MAC units 108-1, 108-2, ..., 108-N depicted in Fig. 1. However, the MAC units depicted in Fig. 1 can be implemented differently from the MAC unit depicted in Fig. 4.

Compared to a credit-based approach that replenishes a communications credit value or level assigned to a communications node based on passed time or bit time, the MAC unit 408 depicted in Fig. 4 can replenish a communications credit value or level assigned to a corresponding communications node 104-1, 104-2, ..., or 104-N in each communications round. The MAC unit can control medium admission for a corresponding communications node by keeping track of recent data transmissions. Compared to a credit-based approach that replenishes a communications credit value or level assigned to a communications node based on passed time or bit time, the MAC unit 408 depicted in Fig. 4, when implemented in multiple communications nodes, allow these communications nodes to share the communications medium to increasing or maximizing data rate through the communications medium while increase or maximize fairness regarding the sharing of the communications medium.

In the embodiment of Fig. 4, the distributed round-robin scheduler 414 is configured to perform round-robin scheduling for a corresponding communications node 104-1, 104-2, ..., or 104-N. In some embodiments, the distributed round-robin scheduler 414 is configured to detect the start of a communications round. For example, the distributed round-robin scheduler detects the start of a communications round by detecting a beacon that is transmitted onto the communications medium 102 that precedes the transmission of data frames. In some embodiments, the distributed round-robin scheduler, which can be embedded within the corresponding MAC unit 408 or external to the corresponding MAC unit 408 (e.g., a separate IC device), implements one or more data link layer operations. For example, the distributed round-robin scheduler may determine the size of a data frame to be transmitted onto the communications medium from a corresponding transceiver 106 and/or a received data frame from other communications node(s). The distributed round-robin scheduler may also decode a received message according to a predefined frame format.

In some embodiments, the distributed round-robin scheduler 414 is configured to grant or deny access to the communications medium 102 to a corresponding communications node 104-1, 104-2, ..., or 104-N during a communications round based on a credit value assigned to the communications node in the communications round. The distributed round-robin scheduler may allow or prohibit the communications node to transmit a data frame through the communications medium in a predetermined time slot during the communications round based on the credit value. In some embodiments, the distributed round-robin scheduler allows or prohibits the communications node to transmit a data frame through the communications medium in a predetermined time slot during the communications round based on a comparison result between a credit value assigned to the communications node in a communications round and a credit threshold. The distributed round-robin scheduler, the credit protocol manager 416, and/or the credit counter 418 may compare a credit value assigned to the communications node in a communications round with a credit threshold. If the credit value is greater than the credit threshold, the distributed round-robin scheduler allows the communications node to transmit a data frame through the communications medium in a predetermined time slot during the communications round. If the credit value is less than the credit threshold, the distributed round-robin scheduler allows the communications node to transmit a stall message that indicates the communications node is not allowed to transmit the data frame through the communications medium in the predetermined time slot during the communications round.

In the embodiment of Fig. 4, the credit protocol manager 416 is configured to perform transmission credit management for a corresponding communications node 104-1, 104-2, ..., or 104-N. The credit protocol manager may be configured to assign a credit value to the corresponding communications node, to determine an adjustment to the credit value or reset the credit value during a communications round, and/or to issue a predefined message or demand to other communications node(s).

In some embodiments, the credit protocol manager 416 determines an adjustment (e.g., a replenishment) to the credit value assigned to corresponding communications node 104-1, 104-2, ..., or 104-N, e.g., at the start of a communications round. In some embodiments, the credit protocol manager determines a fixed replenishment per communications round (e.g., 1 credit per round, 2 credit per round or any other suitable value) to the credit value at the start of a communications round. The credit protocol manager may replenish a credit value assigned to a communications node in a communications round with a fixed replenishment value before granting or denying access to the communications medium 102 to the communications node during the communications round based on the credit value. In some embodiments, the credit protocol manager determines a replenishment value as a function of a credit value assigned to a communications node in a communications round. The credit protocol manager may determine a replenishment value as a function of a credit value assigned to a communications node in a communications round and a second credit value that is assigned to a second communications node having access to the communications medium in the communications round. The second credit value may be derived from a message node containing the second credit value that is received at the communication node from the second communications node. Alternatively, the credit protocol manager may estimate the second credit value based on a data frame transmitted by the second communications node in a predetermined time slot during the communications round. In some embodiments, the credit protocol manager determines the replenishment value based on a maximum value or a minimum value of a credit value assigned to a communications node in a communications round and a second credit value that is assigned to a second communications node having access to the communications medium in the communications round.

In some embodiments, the credit protocol manager 416 determines an adjustment (e.g., a reduction or a consumption value) to the credit value at an end of a communications round based on access to the communications medium by a corresponding communications node 104-1, 104-2, ..., or 104-N during the communications round. For example, the credit protocol manager determines an adjustment (e.g., a reduction or a consumption value) to the credit value, e.g., at an end of a communications round based on the size of the data frame transmitted by a corresponding communications node 104 during an assigned time slot in the communications round. In some embodiments, the credit protocol manager determines a reduction or a consumption value that is applied to the credit value based on a predefined credit-to-byte ratio (e.g., 1 credit per 32 byte transmitted, 1 credit per 64 byte transmitted, 1 credit per 128 byte transmitted, or any other suitable value).

In some embodiments, the credit protocol manager 416 resets the credit value assigned to a corresponding communications node 104-1, 104-2, ..., or 104-N, e.g., at the start of a communications round to a predefined value based on access to the communications medium 102 by a corresponding communications node 104 during the communications round. For example, the credit protocol manager resets the credit value assigned to the communications node 104-1, e.g., at the start of a communications round, to a predefined value if the communications node has an empty queue and no pending transmissions and if the credit value assigned to the communications node 104-1 is greater than or equal to a predefined threshold (e.g., greater than or equal to zero).

In some embodiments, the credit protocol manager 416 is configured to issue a yield message to yield the communications medium to other communications node(s) during a communications round if a corresponding communications node 104-1, 104-2, ..., or 104-N has no data to be transmitted in the communications round. In some embodiments, the credit protocol manager is configured to issue a stall message to notify other communications node(s) during a communications round if the credit value assigned to the communications node 104-1 during the communications round is below (e.g., less than) a predefined threshold to allow access to the communications medium 102.

In the embodiment of Fig. 4, the credit counter 418 is configured to perform transmission credit value adjustment and comparison for a corresponding communications node 104-1, 104-2, ..., or 104-N. The credit counter may perform transmission credit value adjustment and comparison for the communications node based on access to the communications medium 102 by the communications node during a communications round or at a particular point in time during a communications round. In some embodiments, the credit counter transmits an adjusted or reset credit value to the credit protocol manager.

In some embodiments, the credit counter 418 is configured to compare the credit value assigned to a corresponding communications node 104-1, 104-2, ..., or 104-N during a communications round with a predefined threshold to allow or deny access to the communications medium 102 during the communications round. For example, if the credit value is below (e.g., less than) the predefined threshold during a communications round, access to the communications medium 102 during the communications round by the communications node is denied. If the credit value is above (e.g., greater than) the predefined threshold during a communications round, access to the communications medium 102 during the communications round by the communications node is granted. The credit counter may transmit a grant demand or message to the credit protocol manager if access to the communications medium 102 during the communications round by the communications node is granted.

In some embodiments, the credit counter 418 performs an adjustment (e.g., applies a replenishment value) to the credit value assigned to a corresponding communications node 104-1, 104-2, ..., or 104-N at the start of a communications round. For example, the credit counter adds a fixed replenishment per communications round (e.g., 1 credit added per round, 2 credit added per round or any other suitable value) to the credit value, e.g., at the start of a communications round.

In some embodiments, the credit counter 418 performs an adjustment (e.g., applies a reduction or a consumption value) to the credit value at an end of a communications round based on access to the communications medium by a corresponding communications node 104-1, 104-2, ..., or 104-N during the communications round. For example, the credit counter deducts a reduction value or a consumption value from the credit value at an end of a communications round based on the size of the data frame transmitted by the corresponding communications node during an assignment time slot in the communications round. In some embodiments, the credit counter deducts a reduction value or a consumption value from the credit value based on a predefined credit-to-byte ratio (e.g., 1 credit deduction per 32 byte transmitted, 1 credit deduction per 64 byte transmitted, 1 credit deduction per 128 byte transmitted, or any other suitable value).

In some embodiments, the credit counter 418 resets the credit value assigned to a corresponding communications node 104-1, 104-2, ..., or 104-N, e.g., at the start of a communications round to a predefined value based on access to the communications medium 102 by the corresponding communications node during the communications round. For example, the credit counter resets the credit value assigned to the corresponding communications node, e.g., at the start of a communications round to a predefined value if the communications node has an empty queue and no pending transmissions.

In some embodiments, the credit protocol manager 416 is configured to replenish a credit value assigned to a communications node 104-1, 104-2, ..., or 104-N in a communications round, the distributed round-robin scheduler 414 is configured to grant or deny access to the communications medium for the communications device during the communications round based on the credit value, and the credit counter 418 is configured to control the credit value in response to granting or denying access to the communications medium for the communications device during the communications round. For example, the credit protocol manager may be further configured to replenish the credit value assigned to the communications node in the communications round with a fixed replenishment value before granting or denying access to the communications medium to the communications node during the communications round based on the credit value. In another example, the credit protocol manager is further configured to determine a replenishment value as a function of the credit value and a second credit value that is assigned to a second communications node having access to the communications medium in the communications round and to replenish the credit value assigned to the communications node in the communications round with the replenishment value. The distributed round-robin scheduler may be further configured to compare the credit value with a credit threshold, if the credit value is greater than the credit threshold, allow the communications node to transmit a data frame through the communications medium in a predetermined time slot during the communications round, and if the credit value is less than the credit threshold, allow the communications node to transmit a stall message that indicates the communications node is not allowed to transmit the data frame through the communications medium in the predetermined time slot during the communications round. The credit counter may be further configured to deduct a credit consumption value from the credit value as a function of a size of a data frame that is transmitted by the communications node through the communications medium in a predetermined time slot during the communications round and to maintain the credit value for a subsequent communications round in response to denying access to the communications medium to the communications node during the communications round.

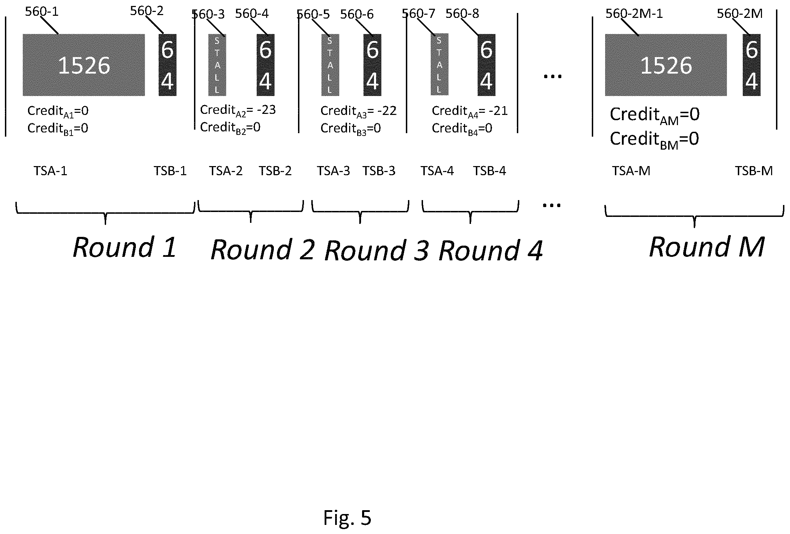

Fig. 5 depicts an example of communications rounds in which communications nodes 104-1, 104-2 depicted in Fig. 1 participate. In the example depicted in Fig. 5, only credit values at the start of each communications round (i.e., before data transmission by the communications nodes) are shown. The credit replenishment value for each communications round is 1 credit added per round. Beacons (not shown) may be transmitted prior to data transmissions in a communications round to indicate the start of the communications round. In round 1, a first data frame 560-1 of 1526 bytes (e.g., the maximum frame size that can be transmitted through Ethernet) is transmitted through the communications medium 102 by the communications node 104-1 during a time slot TSA-1, and subsequently a second data frame 560-2 of 64 bytes is transmitted through the communications medium by the communications node 104-2 during a time slot TSB-1. At the beginning of round 1, the credit value, "$Credit_{A1}$", assigned to the communications node 104-1 and the credit value, "$Credit_{B1}$", assigned to the communications node 104-2 are both zero. After the communications node 104-1 transmits the data frame 560-1 during the time slot TSA-1, the credit value, Credits for round 2 (i.e., the credit value at the end of round 1) of the communications node 104-1 can be computed as:

$$Credit_{A2} = Credit_{A1} - Consumption_{A1} \qquad (1)$$

where $Consumption_{A1}$ represents a credit consumption value of the communications node 104-1 in round 1. The credit consumption value, $Consumption_{A1}$, of the communications node 104-1 in round 1 can be computed as:

$$Consumption_{A1} = F(DF_{Size}) \qquad (2)$$

where F() represents a function, which may be a linear function or a non-linear function, and $DF_{Size}$ represents the size of the data frame 560-1 that the communications node 104-1 transmits during the time slot TSA-1. For the communications node 104-1, $Consumption_{A1}$ is 24 credits deducted per round and the credit value, $Credit_{A2}$ for round 2 is -24 (i.e., 0 - 24 = - 24). For the communications node 104-2, the credit consumption value, "$Consumption_{B1}$", of the communications node 104-2 in round 1 is 1 credit deducted per round and the credit value, $Credit_{B2}$ for round 2 is -1 (i.e., 0 - 1= -1).

At the beginning of round 2, the credit value, $Credit_{A2}$, assigned to the communications node 104-1 and the credit value, $Credit_{B2}$, assigned to the communications node 104-2 are replenished with a fixed replenishment. In the embodiment depicted in Fig. 5, the fixed replenishment is set to 1 credit per round. However, it should be noted that the fixed replenishment can be set to other values. For the communications node 104-1, the replenished credit value, $Credit_{A2}$, is set to -23 (i.e., -24 + 1= 23). For the communications node 104-2, the replenished credit value, $Credit_{B2}$, is set to 0 (i.e. -1 + 1 = 0). In round 2, a stall message 560-3 is transmitted through the communications medium 102 by the communications node 104-1 during a time slot TSA-2, and subsequently a data frame 560-4 of 64 bytes is transmitted through the communications medium by the communications node 104-2 during a time slot TSB-2. After the communications node 104-1 transmits the stall message 560-3 during the time slot TSA-2, the credit value, $Credit_{A3}$ for round 3 (i.e., the credit value at the end of round 2) of the communications node 104-1 is kept or maintained at -23 because the communications node 104-1 does not transmit any data frame during the time slot TSA-2. For the communications node 104-2, the credit value, $Credit_{A3}$ for round 3 is 0 - 1 = -1 (i.e., the credit consumption value for the communications node 104-2 at round 2 is 1 credit deducted per round) because the communications node 104-2 transmits the data frame 560-4 during the time slot TSB-2.

At the beginning of round 3, the credit value, $Credit_{A3}$, assigned to the communications node 104-1 and the credit value, $Credit_{B3}$, assigned to the communications node 104-2 are replenished and the replenished credit value, $Credit_{A3}$, is set to -22 (i.e., -23 + 1 = -22), while the replenished credit value, $Credit_{B3}$, is set to 0 (i.e. -1 + 1 = 0). In round 3, a stall message 560-5 is transmitted through the communications medium 102 by the communications node 104-1 during a time slot TSA-3, and subsequently a data frame 560-6 of 64 bytes is transmitted through the communications medium by the communications node 104-2 during a time slot TSB-3. After the communications node 104-1 transmits the stall message 560-5 during the time slot TSA-3, the credit value, $Credit_{A4}$ for round 4 (i.e., the credit value at the end of round 3) of the communications node 104-1 is kept or maintained at -22 because the communications node 104-1 does not transmit any data frame during the time slot TSA-3. For the communications node 104-2, the credit value, $Credit_{A3}$ for round 4 is 0 - 1 = -1 (i.e., the credit consumption value for the communications node 104-2 at round 3 is 1 credit deducted per round) because the communications node 104-2 transmits the data frame 560-6 during the time slot TSB-3.

At the beginning of round 4, the credit value, $Credit_{A4}$, assigned to the communications node 104-1 and the credit value, $Credit_{B4}$, assigned to the communications node 104-2 are replenished and the replenished credit value, $Credit_{A4}$, is set to -21 (i.e., -22 + 1 = -21), while the replenished credit value, $Credit_{B4}$, is set to 0 (i.e. -1 + 1 = 0). In round 4, a stall message 560-7 is transmitted through the communications medium 102 by the communications node 104-1 during a time slot TSA-4, and subsequently a data frame 560-8 of 64 bytes is transmitted through the communications medium by the communications node 104-2 during a time slot TSB-4. After the communications node 104-1 transmits the stall message 560-7 during the time slot TSA-4, the credit value, $Credit_{A5}$ for round 5 (i.e., the credit value at the end of round 4) of the communications node 104-1 is kept or maintained at -21 because the communications node 104-1 does not transmit any data frame during the time slot TSA-4. For the communications node 104-2, the credit value, $Credit_{A4}$ for round 4 is 0 - 1 = -1 (i.e., the credit consumption value for the communications node 104-2 at round 4 is 1 credit deducted per round) because the communications node 104-2 transmits the data frame 560-8 during the time slot TSB-4. After 24 rounds of communications, the credit value, "$Credit_{AM}$", assigned to the communications node 104-1 and the credit value, "$Credit_{BM}$", assigned to the communications node 104-2 are both zero in round M (where M is an integer that is greater than 24) and the communications node 104-1 is allowed to access the communications medium 102 in predetermined time slots 560-2M-1, 560-2M.

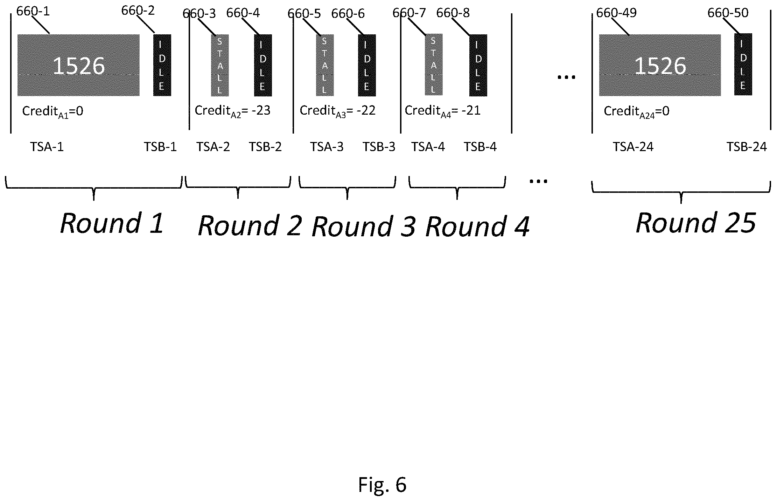

In some scenarios, if a communications node sends a large data frame (e.g. the communications node 104-1 sends a 1526 byte data frame) while other communications node(s) has no data to send, medium bandwidth can be wasted and link capacity can be lost (e.g., not all of the transmission capacity of the communications medium 102 are used). Fig. 6 depicts an example of communications rounds in which link capacity of the communications medium is lost or not fully used. Specifically, the communications node 104-1 is stalled for multiple round after transmitting a large data frame and the communications 104-2 stays idle for all of the communications rounds. Consequently, the communications medium is not fully utilized in multiple communications rounds and medium bandwidth or link capacity is wasted. In the example depicted in Fig. 6, only credit values at the start of each communications round (i.e., before data transmission by the communications nodes) are shown. The credit replenishment value for each communications round is 1 credit added per round. Beacons (not shown) may be transmitted prior to data transmissions in a communications round to indicate the start of the communications round. At the beginning of round 1, the credit value, "$Credit_{A1}$," assigned to the communications node 104-1 is zero. In round 1, a first data frame 660-1 of 1526 bytes (e.g., the maximum frame size that can be transmitted through Ethernet) is transmitted through the communications medium 102 by the communications node 104-1 during a time slot TSA-1, and subsequently an idle message 660-2 is transmitted through the communications medium by the communications node 104-2 during a time slot TSB-1. In the embodiment depicted in Fig. 6, for the communications node 104-1, the credit value, $Credit_{A2}$ for round 2 is -24 (i.e., 0 - 24 = -24) (i.e., the credit consumption value for the communications node 104-1 at round 1 is 24 credits deducted per round).

At the beginning of round 2, the credit replenishment value for round 2 is 1 credit added per round and the credit value, $Credit_{A2}$, assigned to the communications node 104-1 is replenished to -23. In round 2, a stall message 660-3 is transmitted through the communications medium 102 by the communications node 104-1 during a time slot TSA-2, and subsequently an idle message 660-4 is transmitted through the communications medium by the communications node 104-2 during a time slot TSB-2. After the communications node 104-1 transmits the stall message 660-3 during the time slot TSA-2, the credit value, $Credit_{A3}$ for round 3 (i.e., the credit value at the end of round 2) of the communications node 104-1 is kept or maintained at -23 because the communications node 104-1 does not transmit any data frame during the time slot TSA-2.

At the beginning of round 3, the credit replenishment value for round 3 is 1 credit added per round and the credit value, $Credit_{A3}$, assigned to the communications node 104-1 is replenished and the replenished credit value, $Credit_{A3}$, is set to -22. In round 3, a stall message 660-5 is transmitted through the communications medium 102 by the communications node 104-1 during a time slot TSA-3, and subsequently an idle message 660-6 is transmitted through the communications medium by the communications node 104-2 during a time slot TSB-3. After the communications node 104-1 transmits the stall message 560-5 during the time slot TSA-3, the credit value, $Credit_{A4}$ for round 4 (i.e., the credit value at the end of round 3) of the communications node 104-1 is kept or maintained at -22 because the communications node 104-1 does not transmit any data frame during the time slot TSA-3.

At the beginning of round 4, the credit replenishment value for round 4 is 1 credit added per round and the credit value, $Credit_{A4}$, assigned to the communications node 104-1 is replenished and the replenished credit value, $Credit_{A4}$, is set to -21. In round 4, a stall message 660-7 is transmitted through the communications medium 102 by the communications node 104-1 during a time slot TSA-4, and subsequently an idle message 660-8 is transmitted through the communications medium by the communications node 104-2 during a time slot TSB-4. After the communications node 104-1 transmits the stall message 560-7 during the time slot TSA-4, the credit value, $Credit_{A5}$ for round 5 (i.e., the credit value at the end of round 4) of the communications node 104-1 is kept or maintained at -21 because the communications node 104-1 does not transmit any data frame during the time slot TSA-4. After 24 rounds of communications, the credit value, "$Credit_{A25}$", assigned to the communications node 104-1 is zero in round 25 (and the communications node 104-1 is allowed to access the communications medium 102.

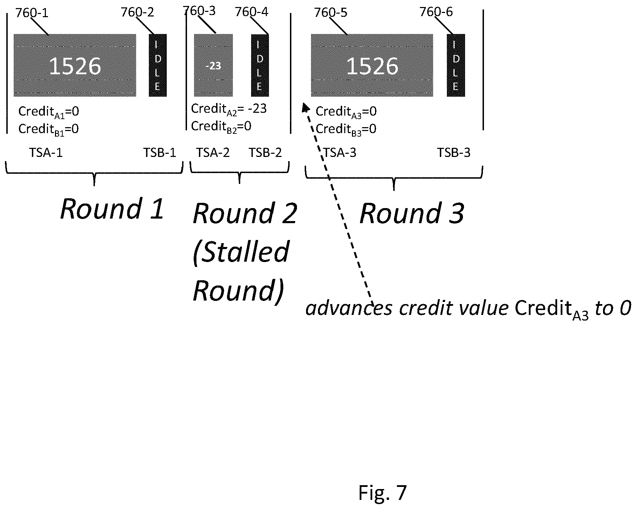

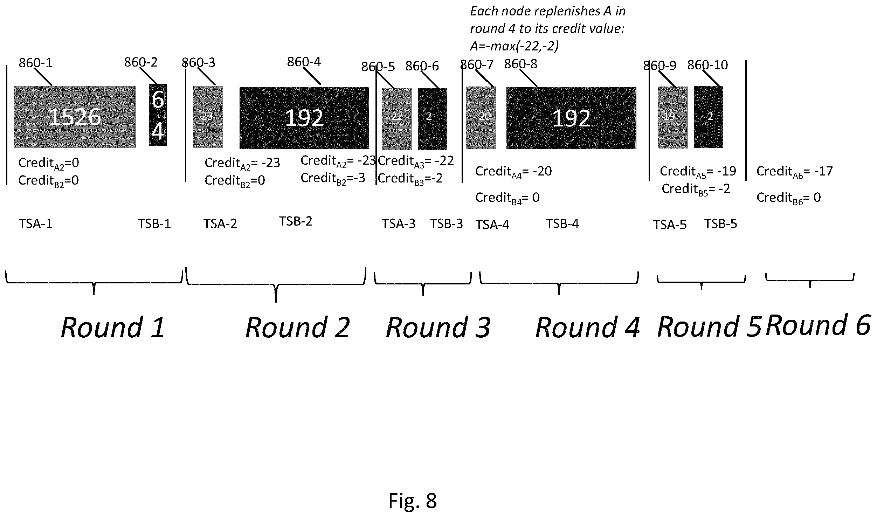

In some embodiments, to address the loss of link capacity (e.g., inefficient use of available transmission capacity of the communications medium 102) when a communications node is stalled while other communications node(s) has no data to send, the communications node transmits its assigned credit value to other communications node(s) during stall time slots (i.e., time slots in which the communications node is stalled. In these embodiments, other communications node(s) may also broadcast its assigned credit value. The communications nodes may collectively determine an increased replenishment value (i.e., decide how many replenishment rounds can be skipped). Alternatively, each communications node may independently determine an increased replenishment value (i.e., decide how many replenishment rounds can be skipped). Figs. 7 and 8 depict two examples of communications rounds in which increased replenishment values are used to improve transmission capacity usage of the communications medium.

Fig. 7 depicts an example of communications rounds in which the communications nodes 104-1, 104-2 depicted in Fig. 1 participate. In the example depicted in Fig. 7, only credit values at the start of each communications round (i.e., before data transmission by the communications nodes) are shown. Beacons (not shown) may be transmitted prior to data transmissions in a communications round to indicate the start of the communications round. At the beginning of round 1, the credit value, "$Credit_{A1}$", assigned to the communications node 104-1 and the credit value, "$Credit_{B1}$", assigned to the communications node 104-2 are both zero. In round 1, a first data frame 760-1 of 1526 bytes (e.g., the maximum frame size that can be transmitted through Ethernet) is transmitted through the communications medium 102 by the communications node 104-1 during a time slot TSA-1, and subsequently an idle message 760-2 is transmitted through the communications medium by the communications node 104-2 during a time slot TSB-1. In the embodiment depicted in Fig. 7, for the communications node 104-1, the credit value, $Credit_{A2}$ for round 2 is -24 (i.e., 0 - 24 = -24) because the communications node 104-1 transmits the data frame 760-1 during the time slot TSA-1, while for the communications node 104-2, the credit value, $Credit_{B2}$ for round 2 is kept or maintained at 0 because the communications node 104-2 does not transmit any data frame during the time slot TSB-1.

At the beginning of round 2, the credit replenishment value for round 2 is 1 credit added per round and the credit value, $Credit_{A2}$, assigned to the communications node 104-1 is replenished to -23 (i.e., -24 + 1 = -23) while the credit value, $Credit_{B2}$, assigned to the communications node 104-2 is zero (i.e., -1 + 1 = 0). In round 2, a message 760-3 containing the credit value of the communications node 104-1 is transmitted through the communications medium 102 by the communications node 104-1 during a time slot TSA-2, and subsequently an idle message 760-4 is transmitted through the communications medium by the communications node 104-2 during a time slot TSB-2. After the communications node 104-1 transmits the message 760-3 containing the credit value of the communications node 104-1 during the time slot TSA-2, the credit value, $Credit_{A3}$ for round 3 (i.e., the credit value at the end of round 2) of the communications node 104-1 is set to zero (i.e., 23 replenishment rounds are skipped) while for the communications node 104-2, the credit value, $Credit_{B3}$ for round 3 is kept or maintained at zero because the communications node 104-2 does not transmit any data frame during the time slot TSB-2.

At the beginning of round 3, the credit value, $Credit_{A3}$, assigned to the communications node 104-1 and the credit value, $Credit_{B3}$ for round 3 are maintained at zero (i.e., saturated at maximum credit value, which is zero in the example of Fig. 7). In round 3, a data frame 760-5 of 1526 bytes (e.g., the maximum frame size that can be transmitted through Ethernet) is transmitted through the communications medium 102 by the communications node 104-1 during a time slot TSA-3, and subsequently an idle message 760-6 is transmitted through the communications medium by the communications node 104-2 during a time slot TSB-3. In the embodiment depicted in Fig. 7, for the communications node 104-1, the credit value, $Credit_{A2}$ for round 4 is -24 (i.e., 0 - 24 = -24) because the communications node 104-1 transmits the data frame 760-5 during the time slot TSA-3, while for the communications node 104-2, the credit value, $Credit_{B2}$ for round 4 is kept or maintained at 0 because the communications node 104-2 does not transmit any data frame during the time slot TSB-3.

Fig. 8 depicts another example of communications rounds in which the communications node 104-1 depicted in Fig. 4 participates. In the example depicted in Fig. 8, credit values at the start of each communications round (i.e., before data transmission by the communications nodes) and credit values at the end of round 2 (i.e., after data transmission by the communications nodes are shown. Beacons (not shown) may be transmitted prior to data transmissions in a communications round to indicate the start of the communications round. At the beginning of round 1, the credit value, "$Credit_{A1}$", assigned to the communications node 104-1 and the credit value, "$Credit_{B1}$", assigned to the communications node 104-2 are both zero. In round 1, a first data frame 860-1 of 1526 bytes (e.g., the maximum frame size that can be transmitted through Ethernet) is transmitted through the communications medium 102 by the communications node 104-1 during a time slot TSA-1, and subsequently a second data frame 860-2 of 64 bytes is transmitted through the communications medium by the communications node 104-2 during a time slot TSB-1. In the embodiment depicted in Fig. 8, for the communications node 104-1, the credit value, $Credit_{A2}$ for round 2 is -24 (i.e., 0 - 24 = -24) because the communications node 104-1 transmits the data frame 860-1 during the time slot TSA-1, while for the communications node 104-2, the credit value, $Credit_{B2}$ for round 2 is -1 (i.e., 0 - 1 = -1) because the communications node 104-2 transmits the data frame 860-2 during the time slot TSB-1.

At the beginning of round 2, the credit replenishment value for round 2 is 1 credit added per round and the credit value, $Credit_{A2}$, assigned to the communications node 104-1 is replenished to -23 (i.e., -24 + 1 = -23) while the credit value, $Credit_{B2}$, assigned to the communications node 104-2 is replenished to 0 (i.e., -1 + 1 = 0). In round 2, a message 860-3 containing the credit value (-23) of the communications node 104-1 is transmitted through the communications medium 102 by the communications node 104-1 during a time slot TSA-2, and subsequently a data frame 860-2 of 192 bytes is transmitted through the communications medium by the communications node 104-2 during a time slot TSB-2. After the communications node 104-1 transmits the message 860-3 containing the credit value of the communications node 104-1 during the time slot TSA-2, the credit value, $Credit_{A3}$ for round 3 (i.e., the credit value at the end of round 2) of the communications node 104-1 is kept or maintained at -23 because the communications node 104-1 does not transmit any data frame during the time slot TSA-2 while for the communications node 104-2, the credit value, $Credit_{B3}$ for round 3 is deducted to -3 (i.e., 0 - 3 = -3) because the communications node 104-2 transmits the data frame 860-4 during the time slot TSB-2.

At the beginning of round 3, the credit replenishment value for round 3 is 1 credit added per round and the credit value, $Credit_{A3}$, assigned to the communications node 104-1 and the credit value, $Credit_{B3}$, assigned to the communications node 104-2 for round 3 are replenished to -22 (i.e., -23 + 1 = -22) and -2 (i.e., -3 + 1 = -2), respectively. In round 3, a message 860-5 containing the credit value (-22) of the communications node 104-1 is transmitted through the communications medium 102 by the communications node 104-1 during a time slot TSA-3, and subsequently a message 860-6 containing the credit value (-2) of the communications node 104-2 is transmitted through the communications medium by the communications node 104-2 during a time slot TSB-3. In the embodiment depicted in Fig. 8, for the communications node 104-1, the credit value, $Credit_{A2}$ for round 4 is -22, while for the communications node 104-2, the credit value, $Credit_{B2}$ for round 4 is -2 because no transmission is conducted through the communications medium during round 3. The communications nodes 104-1, 104-2 may collectively decide how many replenishment rounds can be skipped. Alternatively, each communications node may independently decide how many replenishment rounds can be skipped. In some embodiments, the replenishment value for the next communications round (round 4 in the embodiment depicted in Fig. 8) is determined based on the credit values of the communications nodes 104-1, 104-2 in the current communications round (round 4 in the embodiment depicted in Fig. 8). For example, the replenishment value for the next communications round (round 4 in the embodiment depicted in Fig. 8) may be determined as a function of the credit values of the communications nodes 104-1, 104-2 in the current communications round (round 4 in the embodiment depicted in Fig. 8). In an embodiment, the replenishment value for the next communications round (round 4 in the embodiment depicted in Fig. 8) is determined based on the maximum value or the minimum value of the credit values of the communications nodes 104-1, 104-2 in the current communications round (round 4 in the embodiment depicted in Fig. 8). In the embodiment depicted in Fig. 8, each communications node replenishes a replenishment value of A in the next round (i.e., round 4) to its credit value. The replenishment value of A can be expressed as:

$$A = -\max(-22, -2) = 2 \qquad (3)$$

each communications node advance by 2 rounds in round 4 (i.e., the credit replenishment value for round 4 is 2 credit added per round).

At the beginning of round 4, the credit replenishment value for round 4 is 2 credit added per round and the credit value, $Credit_{A4}$, assigned to the communications node 104-1 and the credit value, $Credit_{B4}$, assigned to the communications node 104-2 for round 4 are replenished to -20 (i.e., -22 + 2 = 20) and 0 (i.e., -2 + 2 = 0), respectively. In round 4, a message 860-7 containing the credit value (-20) of the communications node 104-1 is transmitted through the communications medium 102 by the communications node 104-1 during a time slot TSA-4, and subsequently a data frame 860-8 of 192 bytes is transmitted through the communications medium by the communications node 104-2 during a time slot TSB-4. In the embodiment depicted in Fig. 8, for the communications node 104-1, the credit value, $Credit_{A2}$ for round 5 is -20 because no transmission is conducted through the communications medium during round 4 while for the communications node 104-2, the credit value, $Credit_{B2}$ for round 5 is -3 because the data frame 860-8 of 192 bytes is transmitted through the communications medium by the communications node 104-2 during the time slot TSB-4.

At the beginning of round 5, the credit replenishment value for round 5 is 1 credit added per round, and the credit value, $Credit_{A5}$, assigned to the communications node 104-1 and the credit value, $Credit_{B5}$, assigned to the communications node 104-2 for round 5 are replenished to -19 (i.e., -20 + 1 = -19) and -2 (i.e., -3 + 1 = -2), respectively. In round 5, a message 860-9 containing the credit value (-19) of the communications node 104-1 is transmitted through the communications medium 102 by the communications node 104-1 during a time slot TSA-5, and subsequently a message 860-10 containing the credit value (-2) of the communications node 104-2 is transmitted through the communications medium by the communications node 104-2 during a time slot TSB-5. In the embodiment depicted in Fig. 8, for the communications node 104-1, the credit value, $Credit_{A2}$ for round 5 is -19, while for the communications node 104-2, the credit value, $Credit_{B2}$ for round 5 is -2 because no transmission is conducted through the communications medium during round 5. The communications nodes 104-1, 104-2 may collectively decide how many replenishment rounds can be skipped. Alternatively, each communications node may independently decide how many replenishment rounds can be skipped. In some embodiments, the replenishment value for the next communications round (round 4 in the embodiment depicted in Fig. 8) is determined based on the credit values of the communications nodes 104-1, 104-2 in the current communications round (round 4 in the embodiment depicted in Fig. 8). For example, each communications node may replenish a replenishment value of A in the next round (i.e., round 6) to its credit value. The replenishment value of A can be expressed as:

$$A = -max(-19, -2) = 2 \tag{4}$$

each communications node advance by 2 rounds in round 6 (i.e., the credit replenishment value for round 6 is 2 credit added per round).

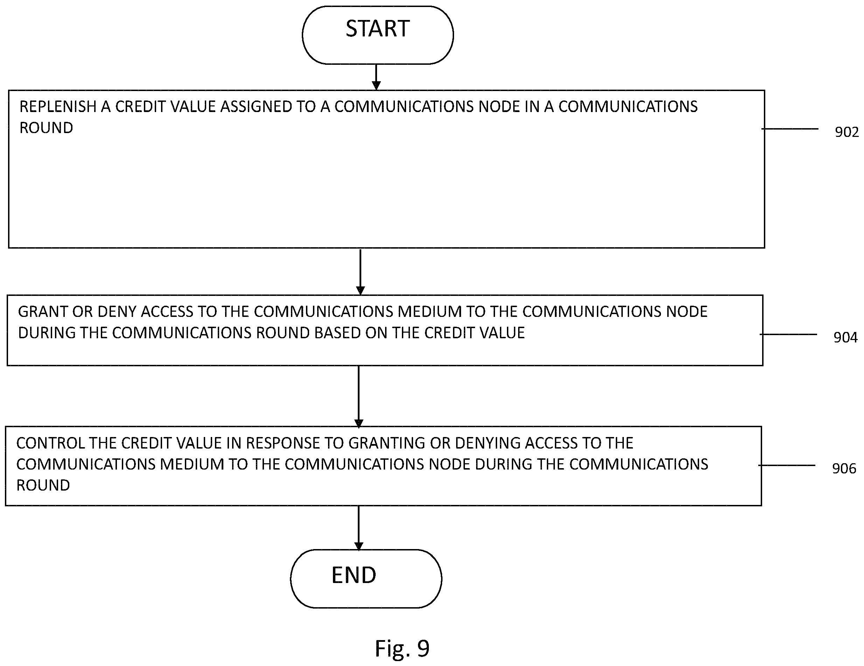

Fig. 9 is a process flow diagram of a method for controlling access to a communications medium in accordance with an embodiment of the invention. At block 902, a credit value assigned to a communications node is replenished in a communications round. At block 904, access to the communications medium to the communications node during the communications round is granted or denied based on the credit value. At block 906, the credit value is controlled in response to granting or denying access to the communications medium to the communications node during the communications round. The communications node may be the same as or similar to the communications nodes 104-1, 104-2, ..., 104-N depicted in Fig. 1.

In the above description, specific details of various embodiments are provided. However, some embodiments may be practiced with less than all of these specific details. In other instances, certain methods, procedures, components, structures, and/or functions are described in no more detail than to enable the various embodiments of the invention, for the sake of brevity and clarity.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto.

## Claims

1. A method for controlling access to a communications medium, the method comprising:

   replenishing (902) a credit value assigned to a communications node in a communications round;
   granting or denying (904) access to the communications medium to the communications node during the communications round based on the credit value; and
   controlling (906) the credit value in response to granting or denying access to the communications medium to the communications node during the communications round;
   the method being **characterized by** determining a replenishment value as a function of the credit value and a second credit value that is assigned to a second communications node having access to the communications medium in the communications round,
   wherein replenishing the credit value assigned to the communications node in the communications round comprises replenishing the credit value assigned to the communications node in the communications round with the replenishment value.

2. The method of claim 1, further comprising:

receiving, at the communications node, a message from the second communications node containing the second credit value;
estimating the second credit value based on a data frame transmitted by the second communications node in a predetermined time slot during the communications round; and/or
wherein determining the replenishment value as the function of the credit value and the second credit value comprises determining the replenishment value based on a maximum value or a minimum value of the credit value and the second credit value.

3. The method of claim 1 or 2, wherein granting or denying access to the communications medium to the communications node during the communications round based on the credit value comprises allowing or prohibiting the communications node to transmit a data frame through the communications medium in a predetermined time slot during the communications round based on the credit value.

4. The method of any preceding claim, wherein granting or denying access to the communications medium to the communications node during the communications round based on the credit value comprises:

comparing the credit value with a credit threshold; and
allowing or prohibiting the communications node to transmit a data frame through the communications medium in a predetermined time slot during the communications round based on a comparison result between the credit value and the credit threshold.

5. The method of any preceding claim, wherein granting or denying access to the communications medium to the communications node during the communications round based on the credit value comprises:

comparing the credit value with a credit threshold;
if the credit value is greater than the credit threshold, allowing the communications node to transmit a data frame through the communications medium in a predetermined time slot during the communications round; and
if the credit value is less than the credit threshold, allowing the communications node to transmit a stall message that indicates the communications node is not allowed to transmit the data frame through the communications medium in the predetermined time slot during the communications round.

6. The method of any preceding claim, wherein controlling the credit value in response to granting or denying access to the communications medium to the communications node during the communications round comprises:

deducting a credit consumption value from the credit value in response to granting access to the communications medium to the communications node during the communications round; and
maintaining the credit value for a subsequent communications round in response to denying access to the communications medium to the communications node during the communications round.

7. The method of claim 6, further comprising determining the credit consumption value based on a characteristic of a data frame that is transmitted by the communications node through the communications medium in a predetermined time slot during the communications round.

8. A device for controlling access to a communications medium (102), the device comprising:

a credit protocol manager (416) configured to replenish a credit value assigned to a communications device in a communications round;
a distributed round-robin scheduler (414) configured to grant or deny access to the communications medium for the communications device during the communications round based on the credit value; and
a credit counter (418) configured to control the credit value in response to granting or denying access to the communications medium for the communications device during the communications round;

wherein the credit protocol manager is **characterized by** being configured to:

determine a replenishment value as the function of the credit value and a second credit value that is assigned to a second communications device having access to the communications medium in the communications round; and

replenish the credit value assigned to the communications device in the communications round with the replenishment value.

9. The device of claim 8, wherein the distributed round-robin scheduler is further configured to:

if the credit value is greater than a credit threshold, allow the communications device to transmit a data frame through the communications medium in a predetermined time slot during the communications round; and
if the credit value is less than the credit threshold, allow the communications device to transmit a stall message that indicates the communications device is not allowed to transmit the data frame through the communications medium in the predetermined time slot during the communications round.

**Patentansprüche**

1. Verfahren zum Steuern des Zugangs zu einem Kommunikationsmedium, wobei das Verfahren umfasst:

das Auffüllen (902) eines Kreditwertes, der einem Kommunikationsknoten in einer Kommunikationsrunde zugewiesen ist;
gegenüber dem Kommunikationsknoten das Gewähren oder Verweigern (904) des Zugangs zu dem Kommunikationsmedium während der Kommunikationsrunde auf Grundlage des Kreditwertes; und
das Steuern (906) des Kreditwertes als Reaktion auf das Gewähren oder Verweigern des Zugangs zu dem Kommunikationsmedium gegenüber dem Kommunikationsknoten während der Kommunikationsrunde;
wobei das Verfahren **gekennzeichnet ist durch** das Bestimmen eines Auffüllwertes als eine Funktion des Kreditwertes und eines zweiten Kreditwertes, der einem zweiten Kommunikationsknoten zugewiesen ist, der Zugang zu dem Kommunikationsmedium in der Kommunikationsrunde hat,
wobei das Auffüllen des Kreditwertes, der dem Kommunikationsknoten in der Kommunikationsrunde zugewiesen ist, das Auffüllen des Kreditwertes, der dem Kommunikationsknoten in der Kommunikationsrunde zugewiesen ist, mit dem Auffüllwert umfasst.

2. Verfahren nach Anspruch 1, das ferner umfasst:

das Empfangen einer Nachricht von dem zweiten Kommunikationsknoten, die den zweiten Kreditwert enthält, an dem Kommunikationsknoten;
das Schätzen des zweiten Kreditwertes auf Grundlage eines Datenrahmens, der von dem zweiten Kommunikationsknoten in einem vorbestimmten Zeitschlitz während der Kommunikationsrunde übertragen wird; und/oder
wobei das Bestimmen des Auffüllwertes als die Funktion des Kreditwertes und des zweiten Kreditwertes das Bestimmen des Auffüllwertes auf Grundlage eines Maximalwertes oder eines Minimalwertes des Kreditwertes und des zweiten Kreditwertes umfasst.

3. Verfahren nach Anspruch 1 oder 2, wobei das Gewähren oder Verweigern des Zugangs zu dem Kommunikationsmedium gegenüber dem Kommunikationsknoten während der Kommunikationsrunde auf Grundlage des Kreditwertes das Erlauben oder Verbieten, dass der Kommunikationsknoten einen Datenrahmen durch das Kommunikationsmedium in einem vorbestimmten Zeitschlitz während der Kommunikationsrunde überträgt, auf Grundlage des Kreditwertes umfasst.

4. Verfahren nach einem vorhergehenden Anspruch, wobei das Gewähren oder Verweigern des Zugangs zu dem Kommunikationsmedium gegenüber dem Kommunikationsknoten während der Kommunikationsrunde auf Grundlage des Kreditwertes umfasst:

das Vergleichen des Kreditwertes mit einer Kreditschwelle; und
das Erlauben oder Verbieten, dass der Kommunikationsknoten einen Datenrahmen durch das Kommunikationsmedium in einem vorbestimmten Zeitschlitz während der Kommunikationsrunde überträgt, auf Grundlage eines Vergleichsergebnisses zwischen dem Kreditwert und der Kreditschwelle.

5. Verfahren nach einem vorhergehenden Anspruch, wobei das Gewähren oder Verweigern des Zugangs zu dem Kommunikationsmedium gegenüber dem Kommunikationsknoten während der Kommunikationsrunde auf Grundlage des Kreditwertes umfasst:

das Vergleichen des Kreditwertes mit einer Kreditschwelle;
wenn der Kreditwert größer ist als die Kreditschwelle, das Erlauben, dass der Kommunikationsknoten einen Datenrahmen durch das Kommunikationsmedium in einem vorbestimmten Zeitschlitz während der Kommunikationsrunde überträgt; und
wenn der Kreditwert kleiner ist als die Kreditschwelle, das Erlauben, dass der Kommunikationsknoten eine Stillstandsnachricht überträgt, die anzeigt, dass es dem Kommunikationsknoten nicht erlaubt ist, den Datenrahmen durch das Kommunikationsmedium in dem vorbestimmten Zeitschlitz während der Kommunikationsrunde zu übertragen.

6. Verfahren nach einem vorhergehenden Anspruch, wobei das Steuern des Kreditwertes als Reaktion auf das Gewähren oder Verweigern des Zugangs zu dem Kommunikationsmedium gegenüber dem Kommunikationsknoten während der Kommunikationsrunde umfasst:

das Abziehen eines Kreditverbrauchswertes von dem Kreditwert als Reaktion auf das Gewähren des Zugangs zu dem Kommunikationsmedium gegenüber dem Kommunikationsknoten während der Kommunikationsrunde; und
das Beibehalten des Kreditwertes für eine folgende Kommunikationsrunde als Reaktion auf das Verweigern des Zugangs zu dem Kommunikationsmedium gegenüber dem Kommunikationsknoten während der Kommunikationsrunde.

7. Verfahren nach Anspruch 6, das ferner das Bestimmen des Kreditverbrauchswertes auf Grundlage eines Merkmals eines Datenrahmens umfasst, der von dem Kommunikationsknoten durch das Kommunikationsmedium in einem vorbestimmten Zeitschlitz während der Kommunikationsrunde übertragen wird.

8. Vorrichtung zum Steuern des Zugangs zu einem Kommunikationsmedium (102), wobei die Vorrichtung aufweist:

einen Kreditprotokollmanager (416), der dazu ausgebildet ist, einen Kreditwert aufzufüllen, der einer Kommunikationsvorrichtung in einer Kommunikationsrunde zugewiesen ist;
einen verteilten Round-Robin-Scheduler (414), der dazu ausgebildet ist, Zugang zu dem Kommunikationsmedium für die Kommunikationsvorrichtung während der Kommunikationsrunde auf Grundlage des Kreditwertes zu gewähren oder zu verweigern; und
einen Kreditzähler (418), der dazu ausgebildet ist, den Kreditwert als Reaktion auf das Gewähren oder Verweigern des Zugangs zu dem Kommunikationsmedium für die Kommunikationsvorrichtung während der Kommunikationsrunde zu steuern;

wobei der Kreditprotokollmanager **dadurch gekennzeichnet ist, dass** er dazu ausgebildet ist:

einen Auffüllwert als die Funktion des Kreditwertes und eines zweiten Kreditwertes, der einer zweiten Kommunikationsvorrichtung zugewiesen ist, der Zugang zu dem Kommunikationsmedium in der Kommunikationsrunde hat, zu bestimmen; und
den Kreditwert, der der Kommunikationsvorrichtung in der Kommunikationsrunde zugewiesen ist, mit dem Auffüllwert aufzufüllen.

9. Vorrichtung nach Anspruch 8, wobei der verteilte Round-Robin-Scheduler ferner dazu ausgebildet ist:

wenn der Kreditwert größer ist als eine Kreditschwelle, zu erlauben, dass die Kommunikationsvorrichtung einen Datenrahmen durch das Kommunikationsmedium in einem vorbestimmten Zeitschlitz während der Kommunikationsrunde überträgt; und
wenn der Kreditwert kleiner ist als die Kreditschwelle, zu erlauben, dass die Kommunikationsvorrichtung eine Stillstandsnachricht überträgt, die anzeigt, dass die Kommunikationsvorrichtung nicht erlaubt ist, den Datenrahmen durch das Kommunikationsmedium in dem vorbestimmten Zeitschlitz während der Kommunikationsrunde zu übertragen.

**Revendications**

1. Procédé de contrôle de l'accès à un support de communications, le procédé comprenant :

   la recharge (902) d'une valeur de crédit assignée à un nœud de communications dans un cycle de communications ;
   l'octroi ou le refus (904) de l'accès au support de communications au nœud de communications au cours du cycle de communications sur la base de la valeur de crédit ; et
   l'ajustement (906) de la valeur de crédit en réponse à l'octroi ou au refus de l'accès au support de communications au nœud de communications au cours du cycle de communications ;
   le procédé étant **caractérisé par**
   la détermination d'une valeur de recharge en fonction de la valeur de crédit et d'une deuxième valeur de crédit qui est assignée à un deuxième nœud de communications ayant accès au support de communications dans le cycle de communications,
   la recharge de la valeur de crédit assignée au nœud de communications dans le cycle de communications comprenant la recharge de la valeur de crédit assignée au nœud de communications dans le cycle de communications par la valeur de recharge.

2. Procédé selon la revendication 1, comprenant en outre :

   la réception, au niveau du nœud de communications, d'un message en provenance du deuxième nœud de communications contenant la deuxième valeur de crédit ;
   l'estimation de la deuxième valeur de crédit sur la base d'une trame de données transmise par le deuxième nœud de communications dans un créneau temporel prédéterminé au cours du cycle de communications ; et/ou
   dans lequel la détermination de la valeur de recharge en fonction de la valeur de crédit et de la deuxième valeur de crédit comprend la détermination de la valeur de recharge sur la base d'une valeur maximale ou d'une valeur minimale de la valeur de crédit et de la deuxième valeur de crédit.

3. Procédé selon la revendication 1 ou 2, dans lequel l'octroi ou le refus de l'accès au support de communications au nœud de communications au cours du cycle de communications sur la base de la valeur de crédit comprend la permission donnée ou l'interdiction faite au nœud de communications de transmettre une trame de données par le biais du support de communications dans un créneau temporel prédéterminé au cours du cycle de communications sur la base de la valeur de crédit.

4. Procédé selon l'une quelconque des revendications précédentes, dans lequel l'octroi ou le refus de l'accès au support de communications au nœud de communications au cours du cycle de communications sur la base de la valeur de crédit comprend :

   la comparaison de la valeur de crédit à un seuil de crédit ; et
   la permission donnée ou l'interdiction faite au nœud de communications de transmettre une trame de données par le biais du support de communications dans un créneau temporel prédéterminé au cours du cycle de communications sur la base d'un résultat de comparaison entre la valeur de crédit et le seuil de crédit.

5. Procédé selon l'une quelconque des revendications précédentes, dans lequel l'octroi ou le refus de l'accès au support de communications au nœud de communications au cours du cycle de communications sur la base de la valeur de crédit comprend :

   la comparaison de la valeur de crédit à un seuil de crédit ;
   si la valeur de crédit est supérieure au seuil de crédit, la permission donnée au nœud de communications de transmettre une trame de données par le biais du support de communications dans un créneau temporel prédéterminé au cours du cycle de communications ; et
   si la valeur de crédit est inférieure au seuil de crédit, la permission donnée au nœud de communications de transmettre un message de blocage qui indique que le nœud de communications n'a pas la permission de transmettre la trame de données par le biais du support de communications dans le créneau temporel prédéterminé au cours du cycle de communications.

6. Procédé selon l'une quelconque des revendications précédentes, dans lequel l'ajustement de la valeur de crédit en réponse à l'octroi ou au refus de l'accès au support de communications au nœud de communications au cours du cycle de communications comprend :

la déduction d'une valeur de consommation de crédit de la valeur de crédit en réponse à l'octroi de l'accès au support de communications au nœud de communications au cours du cycle de communications ; et
le maintien de la valeur de crédit pour un cycle de communications suivant en réponse au refus de l'accès au support de communications au nœud de communications au cours du cycle de communications.

7. Procédé selon la revendication 6, comprenant en outre la détermination de la valeur de consommation de crédit sur la base d'une caractéristique d'une trame de données qui est transmise par le nœud de communications par le biais du support de communications dans un créneau temporel prédéterminé au cours du cycle de communications.

8. Dispositif de contrôle de l'accès à un support de communications (102), le dispositif comprenant :

un gestionnaire de protocole de crédit (416) configuré pour recharger une valeur de crédit assignée à un dispositif de communications dans un cycle de communications ;
un ordonnanceur circulaire réparti (414) configuré pour octroyer ou refuser l'accès au support de communications au dispositif de communications au cours du cycle de communications sur la base de la valeur de crédit ; et
un compteur de crédit (418) configuré pour ajuster la valeur de crédit en réponse à l'octroi ou au refus de l'accès au support de communications pour le dispositif de communications au cours du cycle de communications ;
le gestionnaire de protocole de crédit étant **caractérisé en ce qu'**il est configuré pour :

déterminer une valeur de recharge en fonction de la valeur de crédit et d'une deuxième valeur de crédit qui est assignée à un deuxième dispositif de communications ayant accès au support de communications dans le cycle de communications ; et
recharger la valeur de crédit assignée au dispositif de communications dans le cycle de communications par la valeur de recharge.

9. Dispositif selon la revendication 8, dans lequel l'ordonnanceur circulaire réparti est configuré en outre pour :

si la valeur de crédit est supérieure à un seuil de crédit, permettre au dispositif de communications de transmettre une trame de données par le biais du support de communications dans un créneau temporel prédéterminé au cours du cycle de communications ; et
si la valeur de crédit est inférieure au seuil de crédit, permettre au dispositif de communications de transmettre un message de blocage qui indique que le dispositif de communications n'a pas la permission de transmettre la trame de données par le biais du support de communications dans le créneau temporel prédéterminé au cours du cycle de communications.

Fig. 1

Fig. 2

Fig. 3

350-1, Beacon, 360-1 Yield, Time Slot A-1, 360-2, Data frame, Time Slot B-1, Round 1

350-2, Beacon, 360-3, Data frame, Time Slot A-2, 360-4, Yield, Time Slot B-2, Round 2

To communications medium

MAC UNIT

408

414

416

418

Distributed Round-Robin scheduler

stall

beacon

frame size

remote level

local level

Credit Protocol manager

reset

consume

replenish

grant

level

Credit Counter

To transceiver

Fig. 4

EP 3 531 639 B1

560-1    560-2    560-3  560-4    560-5  560-6    560-7  560-8    560-2M-1    560-2M

1526    6 4    S T A L L  6 4    S T A L L  6 4    S T A L L  6 4    ...    1526    6 4

Credit$_{A1}$=0
Credit$_{B1}$=0

Credit$_{A2}$= -23
Credit$_{B2}$=0

Credit$_{A3}$= -22
Credit$_{B3}$=0

Credit$_{A4}$= -21
Credit$_{B4}$=0

Credit$_{AM}$=0
Credit$_{BM}$=0

TSA-1    TSB-1    TSA-2    TSB-2    TSA-3    TSB-3    TSA-4    TSB-4    TSA-M    TSB-M

*Round 1*    *Round 2*  *Round 3*  *Round 4*    ...    *Round M*

Fig. 5

EP 3 531 639 B1

Round 1   Round 2 Round 3 Round 4          Round 25

Fig. 6

Fig. 7

EP 3 531 639 B1

Fig. 8

START

REPLENISH A CREDIT VALUE ASSIGNED TO A COMMUNICATIONS NODE IN A COMMUNICATIONS ROUND — 902

GRANT OR DENY ACCESS TO THE COMMUNICATIONS MEDIUM TO THE COMMUNICATIONS NODE DURING THE COMMUNICATIONS ROUND BASED ON THE CREDIT VALUE — 904

CONTROL THE CREDIT VALUE IN RESPONSE TO GRANTING OR DENYING ACCESS TO THE COMMUNICATIONS MEDIUM TO THE COMMUNICATIONS NODE DURING THE COMMUNICATIONS ROUND — 906

END

Fig. 9

**EP 3 531 639 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180041956 A